(19) Europäisches Patentamt
European Patent Office
Office européen des brevets

(11) **EP 3 809 154 B1**

(12) **FASCICULE DE BREVET EUROPEEN**

(45) Date de publication et mention de la délivrance du brevet:
**03.08.2022 Bulletin 2022/31**

(21) Numéro de dépôt: **20200148.3**

(22) Date de dépôt: **05.10.2020**

(51) Classification Internationale des Brevets (IPC):
**G01S 5/18** *(2006.01)*   **H04R 27/00** *(2006.01)*
**H04R 29/00** *(2006.01)*   **H04S 7/00** *(2006.01)*
**G01S 1/70** *(2006.01)*   **G01S 3/80** *(2006.01)*

(52) Classification Coopérative des Brevets (CPC):
**H04R 27/00; G01S 3/80; H04R 29/007;** G01S 1/70;
G01S 5/18

(54) **PROCEDE DE REGROUPEMENT D'EQUIPEMENTS PAR ESPACES SONORES**

VERFAHREN ZUR GRUPPIERUNG VON GERÄTEN NACH KLANGRÄUMEN

METHOD FOR GROUPING DEVICES BY SOUND SPACES

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **17.10.2019 FR 1911587**

(43) Date de publication de la demande:
**21.04.2021 Bulletin 2021/16**

(73) Titulaire: **SAGEMCOM BROADBAND SAS**
**92500 Rueil-Malmaison (FR)**

(72) Inventeurs:
• **SODI, Frédéric**
 **92500 RUEIL MALMAISON (FR)**
• **SCHOTT, Vincent**
 **92500 RUEIL MALMAISON (FR)**

(74) Mandataire: **Lavaud, Thomas et al**
**Cabinet Boettcher**
**16, rue Médéric**
**75017 Paris (FR)**

(56) Documents cités:
**WO-A2-2006/131894**   **KR-B1- 101 985 782**
**US-A1- 2009 003 613**

**Description**

L'invention concerne le domaine des installations comprenant des équipements tels que des boîtiers décodeurs et des équipements de diffusion audio.

ARRIERE PLAN DE L'INVENTION

Certaines habitations sont équipées d'une pluralité de boîtiers décodeurs (ou STB, pour *set-top box*) et d'une pluralité d'équipements de diffusion audio. Par « équipement de diffusion audio », on entend ici tout équipement muni d'au moins un haut-parleur : enceinte connectée, barre de son, etc. Les boîtiers décodeurs et les équipements de diffusion audio sont connectés entre eux sur un même réseau (par exemple Ethernet ou Wi-Fi).
Chaque pièce de l'habitation peut contenir un boîtier décodeur et plusieurs équipements de diffusion audio. La pièce constitue un « espace sonore ».
On envisage de regrouper automatiquement, au sein d'un même groupe, le boîtier décodeur et les équipements de diffusion audio d'un même espace sonore. Ce regroupement automatique permet en effet de mettre en œuvre un certain nombre de fonctionnalités.
Un premier exemple de fonctionnalité consiste, pour le boîtier décodeur d'un groupe, à transmettre le signal audio d'un film aux équipements de diffusion audio du groupe et à une télévision située dans l'espace sonore associé au groupe. Le boîtier décodeur transmet aussi le signal vidéo du film à la télévision.
Un deuxième exemple de fonctionnalité consiste, pour un boîtier décodeur, à transmettre le signal audio d'un film aux équipements de diffusion audio d'un autre groupe via un boîtier décodeur de cet autre groupe.
Un troisième exemple de fonctionnalité consiste à utiliser le regroupement pour définir un équipement de diffusion audio particulier qui doit répondre à une requête vocale de l'utilisateur.
Un quatrième exemple de fonctionnalité consiste à faire coopérer entre eux tous les microphones présents dans un même espace sonore, et donc appartenant à un même groupe, pour analyser collectivement une requête vocale de l'utilisateur.
Le regroupement automatique par espaces sonores est donc très avantageux.
On connaît des méthodes de l'art antérieur qui sont destinées à regrouper automatiquement des équipements.
Parmi ces méthodes connues, on trouve notamment des méthodes dans lesquelles les équipements échangent entre eux des messages contenant leur localisation. On trouve aussi des méthodes dans lesquelles un équipement est localisé grâce à l'émission de signaux (radioélectriques ou sonores) par des équipements de référence dont les positions sont connues.
Ainsi, dans ces méthodes de l'art antérieur, il est nécessaire pour regrouper des équipements de connaître la position soit de tous les équipements, soit au moins d'une pluralité d'équipements de référence.
Le document KR 101 985 782 B1 divulgue une méthode qui permet de vérifier, par émission et réception de signaux sonores, qu'un appareil, qui tente de piloter un dispositif de contrôle d'équipements à risque, se trouve bien à proximité desdits équipements à risque et du dispositif de contrôle, et n'est pas en train de pirater à distance ledit dispositif de contrôle.

OBJET DE L'INVENTION

L'invention a pour objet de regrouper par espaces sonores des équipements capables d'émettre des signaux sonores, de manière simple et efficace et sans qu'il soit nécessaire de connaître la position de ces équipements.

RESUME DE L'INVENTION

En vue de la réalisation de ce but, on propose un procédé de regroupement par espaces sonores d'équipements capables d'émettre des signaux sonores et dont la position n'est pas nécessairement connue, comportant une phase opérationnelle comprenant les étapes de :

- faire émettre un signal sonore de test successivement par chaque équipement ;
- faire recevoir le signal sonore de test par chaque équipement capable de recevoir des signaux sonores, et faire évaluer par chacun de ces équipements un niveau de reconnaissance dudit signal sonore de test ;
- évaluer, pour chaque couple d'un équipement Ei et d'un équipement Ej, un niveau de reconnaissance mutuelle représentatif d'un niveau de reconnaissance $N(i, j)$ par l'équipement Ei d'un signal sonore de test émis par l'équipement Ej, et d'un niveau de reconnaissance $N(j, i)$ par l'équipement Ej d'un signal sonore de test émis par l'équipement Ei ;
- déterminer à partir du niveau de reconnaissance mutuelle si l'équipement Ei et l'équipement Ej appartiennent ou non à un même espace sonore.

Le regroupement des équipements est donc réalisé grâce à l'émission par certains ou par tous ces équipements de signaux sonores de test, et par la réception et l'analyse par certains ou tous ces équipements desdits signaux sonores de test.

Le procédé de regroupement par espaces sonores selon l'invention est très efficace, puisqu'il utilise justement des signaux sonores et non d'autres types de signaux (par exemple radioélectriques) qui seraient efficaces pour déterminer la proximité spatiale des équipements mais pas pour évaluer précisément leur « visibilité sonore » réciproque et donc leur appartenance à des espaces sonores communs. Le procédé de regroupement ne nécessite pas de connaître la position des équipements. Par ailleurs, le procédé de regroupement est simple et peu coûteux à mettre en œuvre, puisqu'il ne nécessite pas de ressources *hardware* supplémentaires.

On propose de plus un procédé de regroupement tel que celui qui vient d'être décrit, dans lequel les équipements comprennent des équipements décodeurs et des équipements de diffusion audio.

On propose de plus un procédé de regroupement tel que celui qui vient d'être décrit, comportant en outre une phase préliminaire comprenant l'étape de définir, parmi les équipements, un équipement maître, la phase opérationnelle étant pilotée par l'équipement maître.

On propose de plus un procédé de regroupement tel que celui qui vient d'être décrit, dans lequel l'équipement maître est un équipement décodeur.

On propose aussi un procédé de regroupement tel que celui qui vient d'être décrit, dans lequel la phase opérationnelle comprend les étapes, réalisées par chaque équipement Ei capable de recevoir des signaux sonores, d'émettre et de recevoir un signal sonore de test, et d'évaluer un niveau de reconnaissance propre N(i, i) par ledit équipement Ei dudit signal sonore de test, la phase opérationnelle comprenant de plus les étapes, pour chaque couple d'un équipement Ei et d'un équipement Ej, de définir un niveau de reconnaissance normalisé V(i, j) par l'équipement Ei d'un signal sonore de test émis par l'équipement Ej, tel que :

$$V(i, j) = N(i, j)/N(i, i).$$

On propose aussi un procédé de regroupement tel que celui qui vient d'être décrit, dans lequel le niveau de reconnaissance mutuelle S(i, j) est tel que :

$$S(i, j) = \alpha.V(i, j) + \beta.V(j, i),$$

avec $\alpha + \beta = 1$.

On propose de plus un procédé de regroupement tel que celui qui vient d'être décrit, dans lequel, pour un couple d'un équipement Ei et d'un équipement Ej tel que l'équipement Ei n'est pas capable de recevoir des signaux sonores, on a :

$$S(i, j) = 0 \text{ et } S(j, i) = V(j, i).$$

On propose de plus un procédé de regroupement tel que celui qui vient d'être décrit, dans lequel, pour un couple d'un équipement Ei et d'un équipement Ej qui sont tous deux incapables de recevoir des signaux sonores, on a :

$$S(i, j) = 0 \text{ et } S(j, i) = 0.$$

On propose en outre un procédé de regroupement tel que celui qui vient d'être décrit, dans lequel on détermine que l'équipement Ei reconnaît l'équipement Ej, et donc que l'équipement Ei et l'équipement Ej appartiennent à un même groupe primaire, lorsque :
S(i, j) > Sr, où Sr est un seuil de reconnaissance prédéterminé.

On propose de plus un procédé de regroupement tel que celui qui vient d'être décrit, dans lequel, au sein d'un même groupe primaire, on considère qu'un lien de reconnaissance l(i, j) existe entre un équipement Ei et un équipement Ej lorsque l'équipement Ei reconnaît l'équipement Ej, et dans lequel on considère que le groupe primaire est un groupe finalisé et correspond à un même espace sonore lorsqu'un nombre de liens de reconnaissance existants dans le groupe primaire est égal à un nombre de liens maximal Lmax tel que :

EP 3 809 154 B1

$$Lmax = (n-ns).(n-1),$$

où n est le nombre d'équipements dans le groupe primaire et où ns est, parmi ces équipements, le nombre d'équipements incapables de recevoir des signaux sonores.

On propose en outre un procédé de regroupement tel que celui qui vient d'être décrit, comprenant l'étape, lorsque le nombre de liens de reconnaissance existants dans le groupe primaire est inférieur au nombre de liens maximal Lmax, de présenter à un utilisateur le groupe primaire et de demander à l'utilisateur de décider si le groupe primaire est ou non un groupe finalisé.

On propose aussi un procédé de regroupement tel que celui qui vient d'être décrit, comprenant l'étape, lorsque le nombre de liens de reconnaissance existants dans le groupe primaire est inférieur au nombre de liens maximal Lmax, de comparer le nombre de liens existants avec un seuil de lien prédéterminé, et de considérer que le groupe primaire est un groupe finalisé si le nombre de liens de reconnaissance existants est supérieur ou égal au seuil de lien prédéterminé.

On propose de plus un procédé de regroupement tel que celui qui vient d'être décrit, comprenant en outre l'étape, lorsque le nombre de liens de reconnaissance existants dans le groupe primaire est inférieur au nombre de liens maximal Lmax, de réitérer la phase opérationnelle en modifiant le signal sonore de test et/ou en modifiant une méthode d'analyse du signal sonore de test utilisée pour évaluer le niveau de reconnaissance dudit signal sonore de test.

On propose de plus un procédé de regroupement tel que celui qui vient d'être décrit, comprenant en outre l'étape d'attribuer une fonctionnalité particulière aux équipements d'un même espace sonore.

On propose de plus un équipement comprenant au moins un composant de traitement agencé pour mettre en œuvre la phase opérationnelle du procédé de regroupement qui vient d'être décrit.

On propose de plus un équipement tel que précédemment décrit, l'équipement étant un équipement décodeur.

On propose en outre un programme d'ordinateur comprenant des instructions qui conduisent le composant de traitement de l'équipement tel que décrit ci-dessus à exécuter les étapes de la phase opérationnelle du procédé de regroupement qui vient d'être décrit.

On propose en outre un support d'enregistrement lisible par ordinateur, sur lequel est enregistré le programme d'ordinateur tel que celui qui vient d'être décrit.

L'invention sera mieux comprise à la lumière de la description qui suit d'un mode de mise en œuvre particulier non limitatif de l'invention.

BREVE DESCRIPTION DES DESSINS

Il sera fait référence aux dessins annexés, parmi lesquels :

[Fig. 1] la figure 1 représente une habitation comprenant une pluralité d'espaces sonores ;
[Fig. 2] la figure 2 représente des étapes du procédé de regroupement selon l'invention ;
[Fig. 3] la figure 3 représente une table de vérité utilisée pour calculer des niveaux de reconnaissance normalisés.

DESCRIPTION DETAILLEE DE L'INVENTION

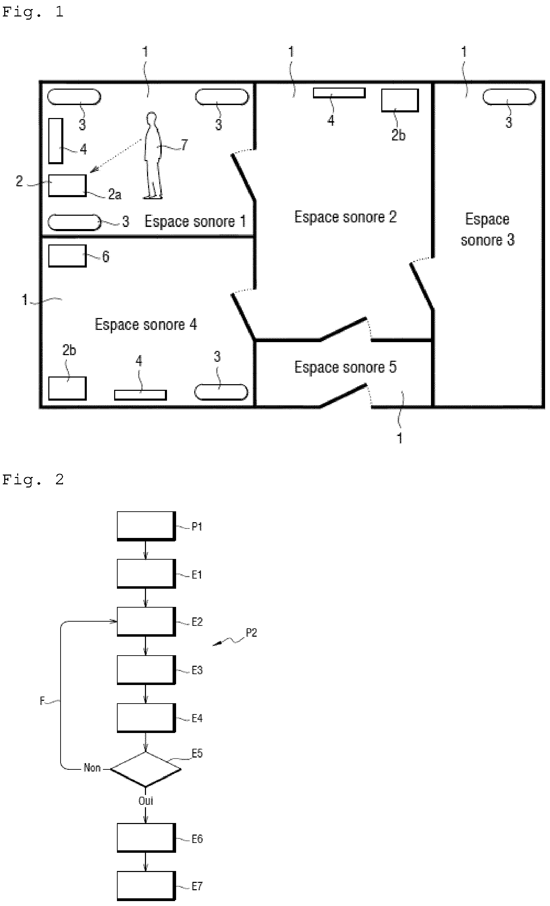

En référence à la figure 1, le procédé de regroupement selon l'invention est ici destiné à regrouper par espaces sonores 1 des équipements qui comprennent des équipements décodeurs, en l'occurrence des boîtiers décodeurs 2 (ou STB, pour *set-top box),* et des équipements de diffusion audio 3. Les espaces sonores 1 correspondent ici à des pièces distinctes d'une habitation. L'habitation comprend aussi des télévisions 4. Chaque boîtier décodeur 2 est relié à une télévision 4 distincte. L'habitation comprend de plus une passerelle 6.

Les boîtiers décodeurs 2 et les équipements de diffusion audio 3 sont connectés sur un même réseau (par exemple Ethernet ou Wi-Fi).

Les boîtiers décodeurs 2 peuvent communiquer avec les équipements de diffusion audio 3 sur le réseau. Il n'est pas nécessaire ici que les équipements de diffusion audio 3 puissent communiquer entre eux.

Les boîtiers décodeurs 2 reçoivent des signaux audio et des signaux vidéo provenant de différentes sources (satellite, câble, IP, TNT, etc.). Les boîtiers décodeurs 2 ont notamment pour rôle de traiter et de transmettre aux équipements de diffusion audio 3 et aux télévisions 4 les signaux audio et les signaux vidéo. Les équipements de diffusion audio 3 diffusent les signaux audio en générant des signaux sonores.

On considère ici que les boîtiers décodeurs 2 sont capables d'émettre des signaux sonores, mais pas d'en recevoir. Pour émettre des signaux sonores, chaque boîtier décodeur 2 utilise les haut-parleurs de la télévision 4 à laquelle il est relié.

Chaque boîtier décodeur 2 est ici relié à une télévision 4 via un lien HDMI. Tout autre lien physique, permettant de relier un boîtier décodeur à une télévision et étant capable de transporter un signal vidéo et/ou audio, pourrait être utilisé. On considère (bien sûr) que les équipements de diffusion audio 3 sont capables d'émettre des signaux sonores, et que les équipements de diffusion audio 3 sont en outre capables de recevoir des signaux sonores. Pour recevoir les signaux sonores, chaque équipement de diffusion audio 3 comprend un ou plusieurs microphones.

Chaque équipement sur le réseau est correctement identifié avec ses capacités, par exemple via un protocole *Zeroconf* de type *Bonjour* ou *Avahi*.

En référence à la figure 2, le procédé de regroupement comporte tout d'abord une phase préliminaire (phase P1), au cours de laquelle un boîtier décodeur maître 2a est défini parmi les boîtiers décodeurs 2. Les autres boîtiers décodeurs 2b sont alors considérés comme des boîtiers décodeurs esclaves.

Le boîtier décodeur maître 2a est ici celui qui est en cours d'utilisation par un utilisateur 7.

Le procédé de regroupement comporte ensuite une phase opérationnelle (phase P2) qui est pilotée par un composant de traitement du boîtier décodeur maître 2a. Le composant de traitement comporte un module logiciel et est adapté à exécuter des instructions d'un programme pour mettre en œuvre cette phase opérationnelle.

Le composant de traitement comprend par exemple un microcontrôleur, un processeur, un FPGA, etc.

Le boîtier décodeur maître 2a récupère sur le réseau les capacités des équipements à émettre et/ou à recevoir des signaux sonores : étape E1.

Le boîtier décodeur maître 2a commande alors l'émission et la réception de signaux sonores de test, ainsi que leur analyse locale par les équipements qui les reçoivent : étape E2.

Plus précisément, le boîtier décodeur maître 2a commande l'émission d'un signal sonore de test successivement par chaque équipement capable d'émettre des signaux sonores, c'est-à-dire ici par les boîtiers décodeurs 2 et par les équipements de diffusion audio 3. Pour chacun de ces équipements « émetteurs », le niveau du signal sonore de test émis est un niveau par défaut. Le niveau par défaut peut être une valeur constante, par exemple égale à 25% du niveau sonore maximal de l'équipement. Le niveau par défaut peut aussi être une valeur fixée par l'utilisateur. Le signal sonore de test est constitué ici d'un motif à amplitude variable et/ou à fréquence variable.

Le boîtier décodeur maître 2a commande, pour chaque équipement capable de recevoir des signaux sonores, c'est-à-dire ici pour chacun des équipements de diffusion audio 3, la réception, l'analyse et l'enregistrement des signaux sonores de test. Cette étape est réalisée en même temps que l'émission : les équipements qui n'émettent pas sont déjà en écoute.

Ainsi, lorsqu'un équipement « émetteur » émet un signal sonore de test, tous les autres équipements « récepteurs » capables de recevoir des signaux sonores reçoivent (simultanément ou successivement) ledit signal sonore de test.

Chaque équipement Ei qui reçoit un signal sonore de test émis par un équipement Ej produit un niveau de reconnaissance N(i, j) de ce signal sonore de test. Le niveau de reconnaissance peut être obtenu par différentes méthodes de reconnaissance : corrélation croisée entre le signal sonore de test émis et le signal sonore de test reçu, filtrage fréquentiel et mesure d'amplitude, démodulation et mesure d'amplitude, etc. Ce traitement est un traitement local réalisé par chaque équipement Ei.

Chaque équipement Ei capable d'émettre et de recevoir des signaux sonores émet alors puis reçoit un signal sonore de test, et évalue un niveau de reconnaissance propre N(i, i) dudit signal de test. Le niveau de reconnaissance propre évalue donc la reconnaissance, par un équipement, d'un signal sonore de test reçu qu'il a lui-même émis. Ce traitement est un traitement local réalisé par chaque équipement Ei.

Tous les équipements transmettent alors au boîtier décodeur maître 2a les niveaux de reconnaissance N(i, j) et les niveaux de reconnaissance propres N(i, i).

Le boîtier décodeur maître 2a analyse alors les niveaux de reconnaissance et les niveaux de reconnaissance propres (étape E3).

Plus précisément, pour chaque couple d'un équipement Ei et d'un équipement Ej, le boîtier décodeur maître 2a définit un niveau de reconnaissance normalisé V(i, j) par l'équipement Ei d'un signal sonore de test émis par l'équipement Ej, tel que :

$$V(i, j) = N(i, j)/N(i, i).$$

Dans le cas où un équipement Ei n'est pas capable de recevoir des signaux sonores, le niveau de reconnaissance normalisé V(i, j) est « indéfini ».

Puis, pour chaque couple d'un équipement Ei et d'un équipement Ej, le boîtier décodeur maître 2a évalue un niveau de reconnaissance mutuelle S(i, j) représentatif d'un niveau de reconnaissance N(i, j) par l'équipement Ei d'un signal sonore de test émis par l'équipement Ej, et d'un niveau de reconnaissance N(j, i) par l'équipement Ej d'un signal sonore de test émis par l'équipement Ei.

Le niveau de reconnaissance mutuelle S(i, j) est égal à une somme pondérée du niveau de reconnaissance normalisé V(i, j) et du niveau de reconnaissance normalisé V(j, i) :

$$S(i, j) = \alpha.V(i, j) + \beta.V(j, i),$$

avec $\alpha + \beta = 1$.

Par exemple, on peut avoir $\alpha = 0.5$ et $\beta = 0.5$, de sorte que le niveau de reconnaissance mutuelle S(i, j) est la moyenne des deux niveaux de reconnaissance normalisés.

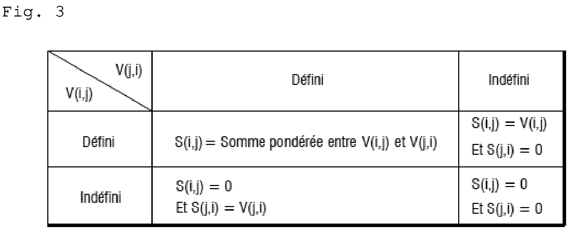

Lorsque le niveau de reconnaissance normalisé V(i, j) et/ou le niveau de reconnaissance normalisé V(j, i) sont indéfinis, le niveau de reconnaissance mutuelle S(i, j) est calculé selon la table de la figure 3.

Ainsi, pour un couple d'un équipement Ei et d'un équipement Ej tel que l'équipement Ei n'est pas capable de recevoir des signaux sonores, on a :

$$S(i, j) = 0 \text{ et } S(j, i) = V(j, i).$$

Pour un couple d'un équipement Ei et d'un équipement Ej qui sont tous deux incapables de recevoir des signaux sonores, on a :

$$S(i, j) = 0.$$

Puis, le boîtier décodeur maître 2a détermine qu'un équipement Ei reconnaît un équipement Ej lorsque le niveau de reconnaissance mutuelle S(i, j) est supérieur à un seuil de reconnaissance prédéterminé Sr, c'est-à-dire si :

$$S(i, j) > Sr.$$

Le seuil de reconnaissance prédéterminé Sr est par exemple égal à 0.75 ; une valeur de S(i, j) égale à 1 correspond à une reconnaissance mutuelle théorique parfaite entre l'équipement Ei et l'équipement Ej.

L'ensemble des résultats accumulés au cours de l'étape E3 permet au boîtier décodeur maître 2a de construire des groupes primaires d'équipements (étape E4).

Le boîtier décodeur maître 2a détermine que l'équipement Ei et l'équipement Ej appartiennent à un même groupe primaire lorsque l'équipement Ei reconnaît l'équipement Ej (c'est-à-dire lorsque S(i, j) > Sr) ou bien lorsque l'équipement Ej reconnaît l'équipement Ei (c'est-à-dire lorsque S(j, i) > Sr).

Un groupe primaire est donc défini dès qu'un lien de reconnaissance unidirectionnel existe entre deux équipements.

Au sein d'un même groupe primaire, on considère qu'un lien de reconnaissance l(i, j) existe entre un équipement Ei et un équipement Ej lorsque l'équipement Ei reconnaît l'équipement Ej.

Le boîtier décodeur maître 2a détermine alors, pour chaque groupe primaire, le nombre de liens de reconnaissance existants.

Puis, pour chaque groupe primaire, le boîtier décodeur maître 2a compare le nombre de liens de reconnaissance existants avec un nombre de liens maximal Lmax :

$$Lmax = (n-ns).(n-1),$$

où n est un nombre d'équipements dans le groupe primaire et où ns est, parmi ces équipements, le nombre d'équipements incapables de recevoir des signaux sonores (étape E5).

Si le nombre de liens de reconnaissance existants dans le groupe primaire est égal au nombre de liens maximal Lmax, alors tous les équipements du groupe primaire se reconnaissent réciproquement. Dans ce cas, le boîtier décodeur maître 2a considère que le groupe primaire est un groupe finalisé, qui correspond bien à un même espace sonore.

Le résultat est alors présenté à l'utilisateur 7 pour confirmation ou correction. Les groupes finalisés d'équipements sont sauvegardés dans une mémoire non volatile du boîtier décodeur maître 2a (étape E6).

Au cours de l'étape E5, par contre, lorsque le nombre de liens existants dans un groupe primaire est inférieur au nombre de liens maximal Lmax, plusieurs solutions sont possibles.

Une première solution consiste à présenter à l'utilisateur le groupe primaire et à demander à l'utilisateur de décider si le groupe primaire est ou non un groupe finalisé qui correspond bien à un même espace sonore.

Une deuxième solution consiste à comparer le nombre de liens de reconnaissance existants avec un seuil de lien prédéterminé Sl, et à considérer automatiquement que le groupe primaire est un groupe finalisé si le nombre de liens de reconnaissance existants est supérieur ou égal au seuil de lien prédéterminé Sl.

Le seuil de lien prédéterminé est par exemple tel que :

$$Sl = 0,75.Lmax.$$

Si le nombre de liens de reconnaissance existants est supérieur ou égal au seuil de lien prédéterminé, le groupe primaire est considéré comme étant un groupe finalisé, malgré le fait que des liens de reconnaissance manquent.

Lorsque le nombre de liens de reconnaissance existants est inférieur au seuil de lien prédéterminé, on présente à l'utilisateur le groupe primaire, et l'utilisateur décide si le groupe primaire est ou non un groupe finalisé qui correspond bien à un même espace sonore.

Une troisième solution consiste à réitérer la phase opérationnelle P2 et à revenir à l'étape E2 (voir flèche F sur la figure 2), en modifiant le signal sonore de test et/ou en utilisant une autre méthode de reconnaissance du signal sonore de test reçu. On tente alors de réévaluer les liens manquants.

Suite à l'étape E6, le boîtier décodeur maître 2a transmet la liste des groupes finalisés à chaque équipement (étape E7).

Tous les boîtiers décodeurs 2 sont alors au même niveau : il n'y a plus de boîtier décodeur maître et de boîtier décodeur esclave. Chaque boîtier décodeur 2 peut gérer de manière autonome son groupe finalisé.

L'utilisateur peut affecter à chaque groupe finalisé une ou plusieurs fonctionnalités, et par exemple une ou plusieurs des première fonctionnalité, deuxième fonctionnalité, troisième fonctionnalité et quatrième fonctionnalité décrites plus tôt.

On note ici que, si l'utilisateur 7 change un équipement de pièce, la phase opérationnelle P2 du procédé de regroupement doit être relancée.

On note aussi qu'il est possible de considérer que tous les équipements qui ne sont pas fabriqués par un fabricant particulier sont considérés de la même manière que les boîtiers décodeurs esclaves 2b.

On note par ailleurs que, dans cette description, tous les équipements évoqués sont capables d'émettre des signaux sonores. Les équipements incapables d'émettre des signaux sonores sont identifiés et sont présentés à l'utilisateur en même temps que la liste des groupes finalisés. L'utilisateur décide alors lui-même s'il souhaite intégrer ces équipements dans les groupes finalisés.

Bien entendu, l'invention n'est pas limitée au mode de réalisation décrit mais englobe toute variante entrant dans le champ de l'invention telle que définie par les revendications.

On a décrit ici que les boîtiers décodeurs sont capables d'émettre des signaux sonores, mais pas d'en recevoir.

Bien sûr, il est parfaitement possible que les boîtiers décodeurs soient capables de recevoir des signaux sonores, ce qui permet de leur conférer un véritable niveau de reconnaissance normalisé V(i, j) et non un V(i, j) indéfini. Les boîtiers décodeurs peuvent donc être équipés d'un microphone, ou bien reliés à un microphone, par exemple au microphone présent dans une télécommande (de type *Bluetooth* par exemple). Dans le cas d'une télécommande avec microphone, c'est la télécommande qui commande le boîtier décodeur maître pendant la configuration qui doit être utilisée (car elle se situe nécessairement dans la même pièce que le boîtier décodeur maître).

On a décrit que l'utilisateur peut affecter à chaque groupe finalisé une ou plusieurs fonctionnalités. Cette affectation peut aussi être réalisée de manière automatique, par exemple par le boîtier décodeur maître ou bien par chaque boîtier décodeur pour son propre groupe finalisé.

Les espaces sonores ne sont pas nécessairement des pièces distinctes, mais peuvent par exemple être des surfaces distinctes dans une même pièce de taille importante (un *open space* par exemple).

Les équipements décodeurs ne sont pas nécessairement des boîtiers décodeurs (ou STB), mais pourraient être d'autres équipements capables de réaliser un décodage audio, vidéo, ou audio/vidéo, par exemple une console de jeu, un ordinateur, une *smart*-TV, etc.

Plus généralement, l'invention n'est pas nécessairement mise en œuvre avec des équipements décodeurs ou des équipements de diffusion audio, mais peut être mise en œuvre avec tout type d'équipement capable d'émettre des signaux sonores.

**Revendications**

1. Procédé de regroupement par espaces sonores (1) d'équipements capables d'émettre des signaux sonores et dont la position n'est pas nécessairement connue, comportant une phase opérationnelle (P2) comprenant les étapes de :

- faire émettre un signal sonore de test successivement par chaque équipement ;
- faire recevoir le signal sonore de test par chaque équipement capable de recevoir des signaux sonores, et faire évaluer par chacun de ces équipements un niveau de reconnaissance dudit signal sonore de test ;
- évaluer, pour chaque couple d'un équipement Ei et d'un équipement Ej, un niveau de reconnaissance mutuelle représentatif d'un niveau de reconnaissance $N(i, j)$ par l'équipement Ei d'un signal sonore de test émis par l'équipement Ej, et d'un niveau de reconnaissance $N(j, i)$ par l'équipement Ej d'un signal sonore de test émis par l'équipement Ei ;
- déterminer à partir du niveau de reconnaissance mutuelle si l'équipement Ei et l'équipement Ej appartiennent ou non à un même espace sonore.

2. Procédé de regroupement selon la revendication 1, dans lequel les équipements comprennent des équipements décodeurs (2) et des équipements de diffusion audio (3).

3. Procédé de regroupement selon l'une des revendications précédentes, comportant en outre une phase préliminaire (P1) comprenant l'étape de définir, parmi les équipements, un équipement maître (2a), la phase opérationnelle (P2) étant pilotée par l'équipement maître (2a).

4. Procédé de regroupement selon la revendication 2 et la revendication 3, dans lequel l'équipement maître est un équipement décodeur.

5. Procédé de regroupement selon l'une des revendications précédentes, dans lequel la phase opérationnelle (P2) comprend les étapes, réalisées par chaque équipement Ei capable de recevoir des signaux sonores, d'émettre et de recevoir un signal sonore de test, et d'évaluer un niveau de reconnaissance propre $N(i, i)$ par ledit équipement Ei dudit signal sonore de test, la phase opérationnelle comprenant de plus les étapes, pour chaque couple d'un équipement Ei et d'un équipement Ej, de définir un niveau de reconnaissance normalisé $V(i, j)$ par l'équipement Ei d'un signal sonore de test émis par l'équipement Ej, tel que :

$$V(i, j) = N(i, j)/N(i, i).$$

6. Procédé de regroupement selon la revendication 5, dans lequel le niveau de reconnaissance mutuelle $S(i, j)$ est tel que :

$$S(i, j) = \alpha.V(i, j) + \beta.V(j, i),$$

avec $\alpha + \beta = 1$.

7. Procédé de regroupement selon la revendication 6, dans lequel, pour un couple d'un équipement Ei et d'un équipement Ej tel que l'équipement Ei n'est pas capable de recevoir des signaux sonores, on a :

$$S(i, j) = 0 \text{ et } S(j, i) = V(j, i).$$

8. Procédé de regroupement selon la revendication 6, dans lequel, pour un couple d'un équipement Ei et d'un équipement Ej qui sont tous deux incapables de recevoir des signaux sonores, on a :

$$S(i, j) = 0 \text{ et } S(j, i) = 0.$$

9. Procédé de regroupement selon l'une des revendications précédentes, dans lequel on détermine que l'équipement Ei reconnaît l'équipement Ej, et donc que l'équipement Ei et l'équipement Ej appartiennent à un même groupe primaire, lorsque :
$S(i, j) > Sr$, où $Sr$ est un seuil de reconnaissance prédéterminé.

10. Procédé de regroupement selon la revendication 9, dans lequel, au sein d'un même groupe primaire, on considère qu'un lien de reconnaissance $l(i, j)$ existe entre un équipement Ei et un équipement Ej lorsque l'équipement Ei reconnaît l'équipement Ej, et dans lequel on considère que le groupe primaire est un groupe finalisé et correspond à un même espace sonore (1) lorsqu'un nombre de liens de reconnaissance existants dans le groupe primaire est égal à un nombre de liens maximal Lmax tel que :

$$\mathtt{Lmax\ =\ (n-ns).(n-1),}$$

où n est le nombre d'équipements dans le groupe primaire et où ns est, parmi ces équipements, le nombre d'équipements incapables de recevoir des signaux sonores.

11. Procédé de regroupement selon la revendication 10, comprenant l'étape, lorsque le nombre de liens de reconnaissance existants dans le groupe primaire est inférieur au nombre de liens maximal Lmax, de présenter à un utilisateur (7) le groupe primaire et de demander à l'utilisateur de décider si le groupe primaire est ou non un groupe finalisé.

12. Procédé de regroupement selon la revendication 10, comprenant l'étape, lorsque le nombre de liens de reconnaissance existants dans le groupe primaire est inférieur au nombre de liens maximal Lmax, de comparer le nombre de liens existants avec un seuil de lien prédéterminé, et de considérer que le groupe primaire est un groupe finalisé si le nombre de liens de reconnaissance existants est supérieur ou égal au seuil de lien prédéterminé.

13. Procédé de regroupement selon la revendication 10, comprenant en outre l'étape, lorsque le nombre de liens de reconnaissance existants dans le groupe primaire est inférieur au nombre de liens maximal Lmax, de réitérer la phase opérationnelle (P2) en modifiant le signal sonore de test et/ou en modifiant une méthode d'analyse du signal sonore de test utilisée pour évaluer le niveau de reconnaissance dudit signal sonore de test.

14. Procédé de regroupement selon l'une des revendications précédentes, comprenant en outre l'étape d'attribuer une fonctionnalité particulière aux équipements d'un même espace sonore.

15. Equipement comprenant au moins un composant de traitement agencé pour mettre en œuvre la phase opérationnelle du procédé de regroupement selon l'une des revendications précédentes.

16. Equipement selon la revendication 15, l'équipement étant un équipement décodeur.

17. Programme d'ordinateur comprenant des instructions qui conduisent le composant de traitement de l'équipement selon la revendication 15 à exécuter les étapes de la phase opérationnelle du procédé de regroupement selon l'une des revendications 1 à 14.

18. Support d'enregistrement lisible par ordinateur, sur lequel est enregistré le programme d'ordinateur selon la revendication 17.


**Patentansprüche**

1. Gruppierungsverfahren zur Gruppierung von Geräten, die imstande sind, Tonsignale auszusenden, und deren Position nicht notwendigerweise bekannt ist, nach Klangräumen (1), umfassend eine Betriebsphase (P2), die die Schritte umfasst:

- Veranlassen, dass jedes Gerät nacheinander ein Testtonsignal aussendet;
- Veranlassen, dass jedes Gerät, das imstande ist, Tonsignale zu empfangen, das Testtonsignal empfängt, und Veranlassen, dass jedes dieser Geräte ein Erkennungsniveau des genannten Testtonsignals evaluiert;
- für jedes Paar aus einem Gerät Ei und einem Gerät Ej, Evaluieren eines gegenseitigen Erkennungsniveaus, das repräsentativ für ein Erkennungsniveau N(i, j) eines von dem Gerät Ej ausgesandten Testtonsignals durch das Gerät Ei und ein Erkennungsniveau N(j, i) eines von dem Gerät Ei ausgesandten Testtonsignals durch das Gerät Ej ist;
- Bestimmen anhand des gegenseitigen Erkennungsniveaus, ob das Gerät Ei und das Gerät Ej zu einem selben Klangraum gehören oder nicht.

2. Gruppierungsverfahren nach Anspruch 1, bei dem die Geräte Decodergeräte (2) und Audioübertragungsgeräte (3) umfassen.

3. Gruppierungsverfahren nach einem der vorhergehenden Ansprüche, ferner umfassend eine vorbereitende Phase (P1), die den Schritt des Definierens eines Master-Geräts (2a) unter den Geräten umfasst, wobei die Betriebsphase (P2) von dem Master-Gerät (2a) gesteuert wird.

4. Gruppierungsverfahren nach Anspruch 2 und Anspruch 3, bei dem das Master-Gerät ein Decodergerät ist.

5. Gruppierungsverfahren nach einem der vorhergehenden Ansprüche, bei dem die Betriebsphase (P2) die von jedem Gerät Ei, das imstande ist, Tonsignale zu empfangen, ausgeführten Schritte des Sendens und Empfangens eines Testtonsignals und des Evaluierens eines Selbsterkennungsniveaus N(i, i) des genannten Testtonsignals durch das Gerät Ei umfasst, wobei die Betriebsphase ferner für jedes Paar aus einem Gerät Ei und einem Gerät Ej die Schritte des Definierens eines normierten Erkennungsniveaus V(i, j) eines von dem Gerät Ej ausgesandten Testtonsignals durch das Gerät Ei umfasst, sodass:

$$V(i, j) = N(i, j) / N(i, i).$$

6. Gruppierungsverfahren nach Anspruch 5, bei dem das gegenseitige Erkennungsniveau S(i, j) derart ist, dass:

$$S(i,j) = \alpha.V(i, j) + \beta.V(j, i),$$

mit $\alpha + \beta = 1$.

7. Gruppierungsverfahren nach Anspruch 6, bei dem für ein Paar aus einem Gerät Ei und einem Gerät Ej, bei dem das Gerät Ei nicht imstande ist, Tonsignale zu empfangen, gilt:

$$S(i, j) = 0 \text{ und } S(j, i) = V(j, i).$$

8. Gruppierungsverfahren nach Anspruch 6, bei dem für ein Paar aus einem Gerät Ei und einem Gerät Ej, die alle beide nicht imstande sind, Tonsignale zu empfangen, gilt:

$$S(i, j) = 0 \text{ und } S(j, i) = 0.$$

9. Gruppierungsverfahren nach einem der vorhergehenden Ansprüche, bei dem bestimmt wird, dass das Gerät Ei das Gerät Ej erkennt, und folglich dass das Gerät Ei und das Gerät Ej zu einer selben primären Gruppe gehören, wenn: S(i, j) > Sr, wobei Sr ein vorbestimmter Erkennungsschwellenwert ist.

10. Gruppierungsverfahren nach Anspruch 9, bei dem man innerhalb einer selben primären Gruppe annimmt, dass eine Erkennungsverbindung I(i, j) zwischen einem Gerät Ei und einem Gerät Ej vorhanden ist, wenn das Gerät Ei das Gerät Ej erkennt, und bei dem man annimmt, dass die primäre Gruppe eine finalisierte Gruppe ist und einem selben Klangraum (1) entspricht, wenn die Anzahl an in der primären Gruppe vorhandenen Erkennungsverbindungen gleich einer maximalen Anzahl an Verbindungen Lmax ist, sodass:

$$Lmax = (n-ns).(n-1),$$

wobei n die Anzahl an beraten in der primären Gruppe ist und wobei ns unter diesen Geräten die Anzahl an Geräten ist, die nicht imstande sind, Tonsignale zu empfangen.

11. Gruppierungsverfahren nach Anspruch 10, umfassend, wenn die Anzahl an in der primären Gruppe vorhandenen Erkennungsverbindungen kleiner als die maximale Anzahl an Verbindungen Lmax ist, den Schritt des Präsentierens der primären Gruppe einem Benutzer (7) und des Aufforderns des Benutzers, zu entscheiden, ob die primäre Gruppe eine finalisierte Gruppe ist oder nicht.

12. Gruppierungsverfahren nach Anspruch 10, umfassend, wenn die Anzahl an in der primären Gruppe vorhandenen Erkennungsverbindungen kleiner als die maximale Anzahl an Verbindungen Lmax ist, den Schritt des Vergleichens der Anzahl an vorhandenen Verbindungen mit einem vorbestimmten Verbindungsschwellenwert und des Annehmens, dass die primäre Gruppe eine finalisierte Gruppe ist, wenn die Anzahl an vorhandenen Erkennungsverbindungen größer oder gleich dem vorbestimmten Verbindungsschwellenwert ist.

**13.** Gruppierungsverfahren nach Anspruch 10, ferner umfassend, wenn die Anzahl an in der primären Gruppe vorhandenen Erkennungsverbindungen kleiner als die maximale Anzahl an Verbindungen Lmax ist, den Schritt des Wiederholens der Betriebsphase (P2), während das Testtonsignal modifiziert wird und/oder während ein Verfahren zur Analyse des Testtonsignals, das verwendet wird, um das Erkennungsniveau des genannten Testtonsignals zu evaluieren, modifiziert wird.

**14.** Gruppierungsverfahren nach einem der vorhergehenden Ansprüche, ferner umfassend den Schritt des Zuweisens einer besonderen Funktionalität zu den Geräten eines selben Klangraums.

**15.** Gerät, umfassend mindestens eine Verarbeitungskomponente, die ausgebildet ist, um die Betriebsphase des Gruppierungsverfahrens nach einem der vorhergehenden Ansprüche durchzuführen.

**16.** Gerät nach Anspruch 15, wobei das Gerät ein Decodergerät ist.

**17.** Computerprogramm, umfassend Anweisungen, die die Verarbeitungskomponente des Geräts nach Anspruch 15 veranlassen, die Schritte der Betriebsphase des Gruppierungsverfahrens nach einem der Ansprüche 1 bis 14 auszuführen.

**18.** Computerlesbarer Aufzeichnungsträger, auf dem das Computerprogramm nach Anspruch 17 gespeichert ist.

**Claims**

**1.** A grouping method for grouping pieces of equipment that are capable of emitting sound signals and whose position is not necessarily known, together by sound spaces (1), the method including an operational stage (P2) comprising the steps of:

· causing each piece of equipment to emit a test sound signal in succession;
· causing the test sound signal to be received by each piece of equipment that is capable of receiving sound signals, and causing each of these pieces of equipment to evaluate a recognition level for said test sound signal;
· for each pair of pieces of equipment Ei and Ej, evaluating a mutual recognition level representative both of a recognition level $N(i, j)$ for the piece of equipment Ei receiving a test sound signal emitted by the piece of equipment Ej, and also of a recognition level $N(j, i)$ for the piece of equipment Ej receiving a test sound signal emitted by the piece of equipment Ei;
· on the basis of the mutual recognition level, determining whether or not the pieces of equipment Ei and Ej belong to a common sound space.

**2.** A grouping method according to claim 1, wherein the pieces of equipment comprise pieces of decoder equipment (3) and pieces of audio playback equipment (2).

**3.** A grouping method according to either preceding claim, further including a preliminary stage (P1) comprising the step of defining a master piece of equipment (2a) from among the pieces of equipment, with the operational stage (P2) being controlled by the master piece of equipment (2a) .

**4.** A grouping method according to claim 2 and claim 3, wherein the master piece of equipment is a piece of decoder equipment.

**5.** A grouping method according to any preceding claim, wherein the operational stage (P2) comprises, for each piece of equipment Ei capable of receiving sound signals, steps of emitting and receiving a test sound signal, and a step of said piece of equipment Ei evaluating a self-recognition level $N(i, i)$ for said test sound signal, the operational stage further comprising, for each pair of pieces of equipment Ei and Ej, steps of the piece of equipment Ei defining a normalized recognition level $V(i, j)$ for a test sound signal emitted by the piece of equipment Ej, such that:

$$V(i, j) = N(i, j)/N(i, i).$$

6. A grouping method according to claim 5, wherein the mutual recognition level S(i, j) is such that:

$$S(i, j) = \alpha \times V(i, j) + \beta \times V(j, i),$$

with $\alpha + \beta = 1$.

7. A grouping method according to claim 6, wherein, for a pair of pieces of equipment Ei and Ej in which the piece of equipment Ei is not capable of receiving sound signals, the following applies:

$$S(i, j) = 0 \text{ and } S(j, i) = V(j, i).$$

8. A grouping method according to claim 6, wherein, for a pair of pieces of equipment Ei and Ej that are both incapable of receiving sound signals, the following applies:

$$S(i, j) = 0 \text{ and } S(j, i) = 0.$$

9. A grouping method according to any preceding claim, wherein it is determined that the piece of equipment Ei recognizes the piece of equipment Ej, and thus that the pieces of equipment Ei and Ej belong to a common primary group, when:
S(i, j) > Sr, where Sr is a predetermined recognition threshold.

10. A grouping method according to claim 9, wherein, within a common primary group, it is considered that a recognition link l(i, j) exists between two pieces of equipment Ei and Ej when the piece of equipment Ei recognizes the piece of equipment Ej, and wherein it is considered that the primary group is a finalized group and corresponds to a common sound space (1) when the number of recognition links existing in the primary group is equal to a maximum number of links Lmax such that:

$$Lmax = (n-ns) \times (n-1),$$

where n is the number of pieces of equipment in the primary group and where ns is the number of pieces of equipment among the n pieces that are incapable of receiving sound signals.

11. A grouping method according to claim 10, comprising the step, when the number of recognition links existing in the primary group is less than the maximum number of links Lmax, of presenting the primary group to a user (7) and of requesting the user to decide whether or not the primary group is a finalized group.

12. A grouping method according to claim 10, comprising the step, when the number of recognition links existing in the primary group is less than the maximum number of links Lmax, of comparing the number of existing links with a predetermined link threshold, and of considering that the primary group is a finalized group if the number of existing recognition links is greater than or equal to the predetermined link threshold.

13. A grouping method according to claim 10, further comprising the step, when the number of recognition links existing in the primary group is less than the maximum number of links Lmax, of reiterating the operational stage (P2) while modifying the test sound signal and/or while modifying a method used for analyzing the test sound signal for the purpose of evaluating the recognition level of said test sound signal.

14. A grouping method according to any preceding claim, further comprising the step of allocating a particular function to the pieces of equipment that occupy a common sound space.

15. A piece of equipment including at least one processor component arranged to perform the operational stage of the grouping method according to any preceding claim.

16. A piece of equipment according to claim 15, comprising a piece of decoder equipment.

17. A computer program including instructions that cause the processor component of the piece of equipment according to claim 15 to execute the steps of the operational stage of the grouping method according to any one of claims 1 to 14.

18. A computer readable storage medium having stored thereon the computer program according to claim 17.

Fig. 1

Fig. 2

Fig. 3

| V(j,i) / V(i,j) | Défini | Indéfini |
|---|---|---|
| Défini | S(i,j) = Somme pondérée entre V(i,j) et V(j,i) | S(i,j) = V(i,j) <br> Et S(j,i) = 0 |
| Indéfini | S(i,j) = 0 <br> Et S(j,i) = V(j,i) | S(i,j) = 0 <br> Et S(j,i) = 0 |

## RÉFÉRENCES CITÉES DANS LA DESCRIPTION

**Documents brevets cités dans la description**

- KR 101985782 B1